# EUROPEAN PATENT APPLICATION

(11) **EP 1 227 642 A1**
(43) Date of publication of application: **31.07.2002**
(21) Application number: 01200284.6
(22) Date of filing: 26.01.2001
(51) Int. Cl.: H04M 1/02, H04M 1/22

(54) **Back light device for a hand-held electronic device**

(71) Applicant: Telefonaktiebolaget L M Ericsson (Publ), 126 25 Stockholm (SE)
(72) Inventor: Eberle, Kai, 187 67 Täby (SE); Westin, Hakan, 195 47 Märsta (SE)
(74) Representative: Stein, Jan Anders Lennart

(57) **Abstract**

A hand-held electronic device provided with at least one microprocessor, such as a mobile telephone, a personal computer or the like, comprises a control means, at least one first light source (9, 20, 22, 24) and at least one a second light source (9, 20, 22, 24) each of which being associated with said control means (25), adapted to control the light intensity of the first light source independently from the second light source. According to the invention, said control means (25) is adapted to variably adjust the light intensity, and in that said control means (25) is adapted to control the light intensity depending on ambient light conditions.

## Description

### TECHNICAL FIELD

The present invention relates to a hand-held electronic device provided with at least one microprocessor, such as a mobile telephone, a personal computer or the like, comprising a control means, at least one first light source and at least one second light source each of which being associated with said control means, adapted to control the light intensity of the first light source independently from the second light source.

### BACKGROUND ART

Such hand-held devices in the form of mobile telephones are produced by Ericsson Mobile Communications AB for many years; one light source illuminates the display and the key pad, whereas another light source illuminates an attention lamp. The light source for the display and the key pad may either illuminate them from behind ("back light") or directly onto their surface ("front light"), and is switched on e.g. when any button of the key pad is pressed down and is switched off after a predetermined period of time thereafter. The attention lamp blinks intermittently or continuously in green or red to inform the user of different modes, such as connection to a network, incoming message or phone call, low battery level, ongoing battery charge etc.

Another such hand-held unit is disclosed in US-A-5 894 298, according to which two separate light sources are utilised in order to provide two different light intensity levels for illumination of the screen or no light at all, in response to an ambient light level detector, i.e. the darker it is, the more light is provided to the display.

Other devices provided with controllable illumination of the display are disclosed in US-A-5 337, 073, US-A-4 876 537, US-A-4 754 275, US-A-5 384 577 and EP-A-0 907 158.

During the continuous development of mobile telephones, the demand for power has increased, even though the electric consumption of the electronic circuits has decreased, depending on the development of mobile telephones to more complex units. As the customers demand small battery sizes, it has become important to decrease the total electric consumption.

The object of the invention is therefore to improve the known hand-held device regarding consumption of electric energy.

This object has been achieved by the hand-held unit of the initially defined kind, wherein said control means is adapted to variably adjust the light intensity, and in that said control means is adapted to control the light intensity depending on ambient light conditions. Hereby is achieved longer use of the hand-held unit between charging. Furthermore, when used in darkness, irritating strong light can be avoided.

Preferably, said first light source provides light for a display and wherein said second light source provides light for a key pad. Hereby is achieved that light can be provided on the display when used e.g. at dusk or dawn or in other circumstances with dim light conditions, whereas the key pad is still not illuminated or less illuminated. During such light conditions, illumination of the key pad is simply a waste of battery capacity.

Suitably, at least one third light source is adapted to give attention to the user, said control means being adapted to control the light intensity of the third light source depending on ambient light conditions. Hereby is achieved that also the attention lamp is adjustable.

Advantageously, a light sensor for sensing ambient light is associated with said control means, wherein said control means is adapted to control said light intensity in response to the sensed ambient light. Hereby is achieved an automatic adjustment of the illumination of the light sources, respectively.

Suitably, said control means is adapted to control the light intensity of the third light source independently from the first light source and the second light source, respectively. Alternatively, said control means is adapted to control the light intensity of the third light source together with either of the first light source and the second light source. Hereby, user options are created.

Advantageously, said control means is adapted to control at least one of said light sources to provide a strongest light intensity during dim ambient light conditions, and a less strong light intensity during darkness. Furthermore, said control means is adapted to provide a less strong light intensity during bright ambient light conditions. Hereby, light is provided when best needed.

Suitably, said control means is adapted to infinitely variably adjust the light intensity. Alternatively, the light intensity is adjusted in steps. Hereby are achieved different light intensities for different light conditions.

Advantageously, said control means is adapted to control said light sources by means of predetermined light intensity profiles. Hereby is achieved different illumination levels for different light conditions.

Preferably, at least one fourth light source is provided to illuminate an area beyond the hand-held unit. Hereby, the hand-held unit may be used as a torch or as a pointer.

Suitably, at least one manually operable switch member is provided for manually adjusting the light intensity of said light sources. Hereby, manual adjustment outgoing from the ambient light conditions is made possible, either as an alternative or in addition to the automatic light intensity adjustment.

In particular, said switch member is a rotary switch, associated with an on/off switch.

### DRAWING SUMMARY

In the following, the invention will be described in further detail with reference to the accompanying drawings, in which
Figures 1a and 1b show a mobile telephone in two different views,
Figure 2 illustrates a printed circuit board for the mobile telephone shown in figure 1, including a plurality of light sources,
Figure 3 illustrates the opposite side of the printed circuit board shown in figure 2, including a control means for light sources,
Figure 4 illustrates a hand-held personal computer,
Figure 5 illustrates a printed circuit board for the personal computer shown in figure 4 including a plurality of light sources,
Figure 6 illustrates schematically a light control circuit for the light sources shown in figure 3 and 5, respectively, and
Figures 7a to 7c are diagrams regarding the light intensity of the light sources as a function of the said ambient light.

### DETAILED DESCRIPTION

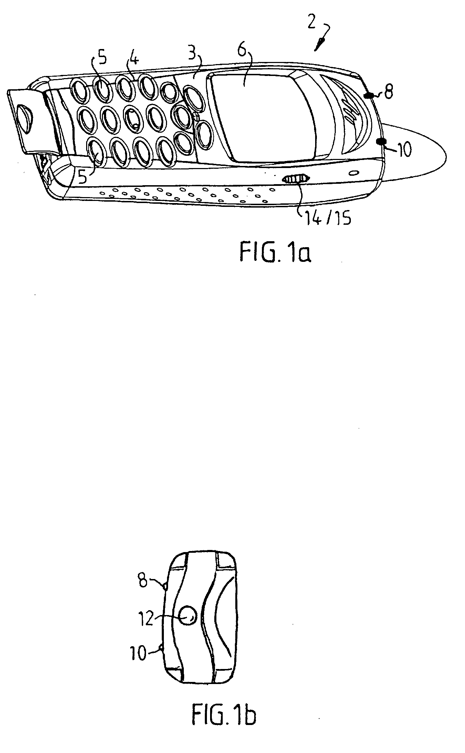

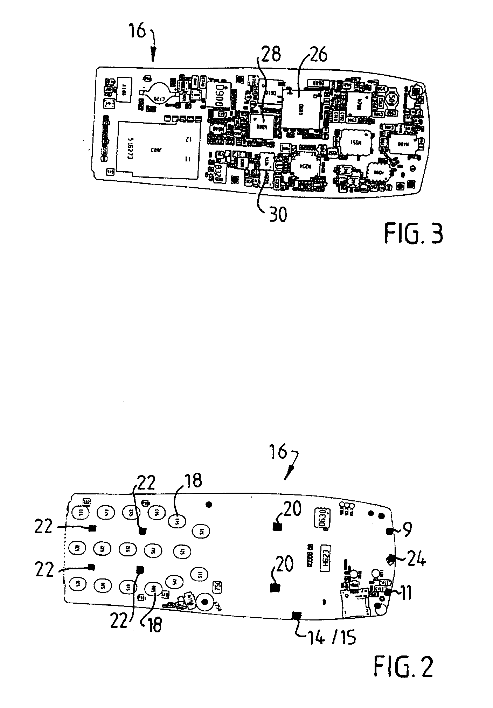

Fig 1a and 1b show a hand-held unit 2 in the form of a mobile telephone, comprising a housing 3, a key pad 4 having a plurality of keys 5, a display 6, a light guide 8 for a light source 9, a light guide 10 for a light sensor 11 (cf. figure 2 for the light sources 9 and 11), a torch lens 12 and a rotary switch 14 associated with an on/off switch 15.

Figure 2 shows a printed circuit board (PCB) 16 to be arranged inside the housing 3, comprising touch pads 18 to be arranged underneath the keys 5. Furthermore, display light sources 20 adapted to be arranged behind the display for illumination thereof from behind, so called back lighting. Key pad light sources 22 are adapted to be arranged on the PCB between touch pads 18 for illumination of the keys 5 from behind - the keys 5 are transparent or semi-transparent and are provided with printed numbers and letters. Of course, the keys may instead be generally non-transparent, however provided with transparent or semi-transparent letters and numbers. Furthermore the PCB is provided with the attention light source 9 to be associated with the light guide 8, and the light sensor 11 to be associated with the light guide 10 and a torch light source 24 adapted to be arranged behind said torch lens 12.

Figure 3 illustrates the opposite side of the printed circuit board shown in figure 2, including a microprocessor comprising a control means 25.

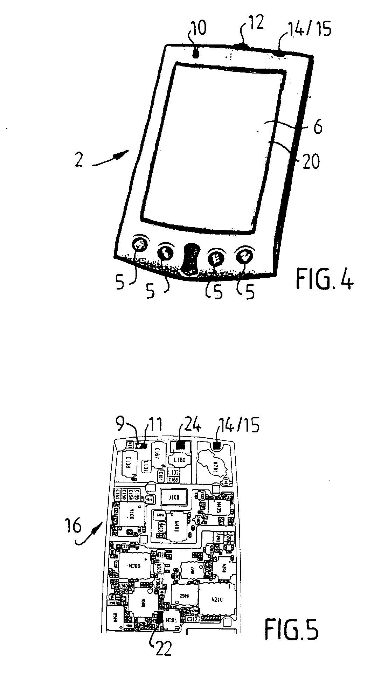

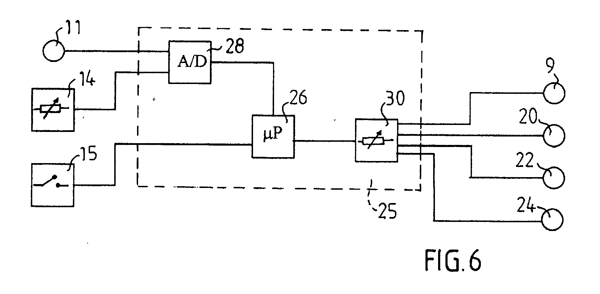

Figures 4 and 5 show a hand-held unit 2 in the form of a personal pocket computer provided with a display 6 provided with a light source 20 in the form of an integrated illumination foil. When connected to electricity, the foil illuminates the display 6. The PCB is provided with a light sensor 11 to be associated with a light guide 10, a torch light source 24 to be arranged behind a torch lens 12 and a rotary switch 14 with integrated on/off switch 15. The PCB is furthermore provided with light sources 22 for the keys 5, and an attention light source 9, associated with the same light guide as the light sensor 11.

In figure 6 is shown schematically how the light sources 9, 20, 22, 24, the light sensor 11, the rotary switch 14 and the on/off switch 15 are associated with a control means 25, comprising a microprocessor 26, an A/D-converter 28 provided for allowing the sensed light to be processed in the microprocessor 26 and a variable current limiter 30.

The microprocessor 26 is connected to the light sources 9, 20, 22 and 24 via the variable current limiter 30, which is controllable by the microprocessor 26. The variable current limiter 30 provides the light sources 9, 20, 22 and 24 with variable current for allowing each light source to supply light of varying light intensity. The microprocessor further includes a timing program, which controls the period of time current is provided to each light source, separately or as a group.

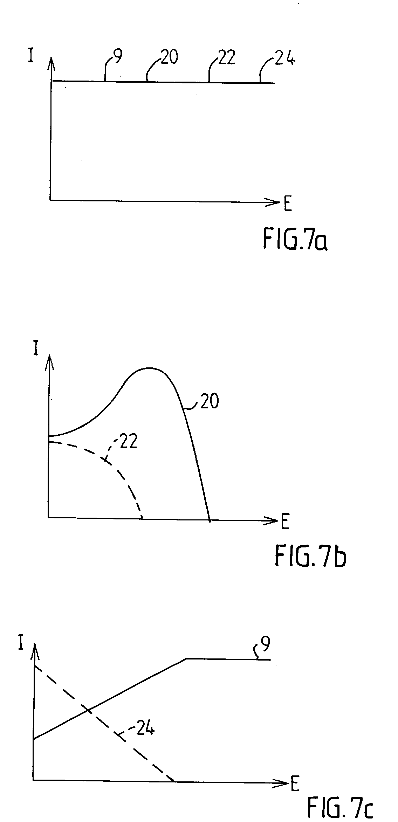

Figures 7a to 7c illustrate by means of graphs how the light intensity I of the light sources varies as a function of the said ambient light E.

Figure 7a illustrates illumination of prior art hand-held units. All light sources provide a constant light intensity, disregarding the ambient light conditions.

Figures 7b and 7c illustrate illumination of hand-held units according to the invention.

In figure 7b, the continuous line relates to the light sources 20 for the display 6. The highest light intensity of the light sources is needed and thus provided at dim light conditions, i.e. when it is neither dark, nor light, e.g. at dusk or dawn, whereas in complete darkness, less light intensity on the display is provided in order to allow viewing the displayed information. In broad daylight or in illuminated rooms, no or little light intensity is provided.

The broken line of the graph shown in figure 7b illustrates the provided illumination of the light sources 22 of the key-pad 4. In complete darkness, illumination is, of course, needed and thus provided. However, when it is neither dark, nor light, no light is provided, as the keys can be seen anyway, and do not need as much illumination as the display does.

In figure 7c, the continuous line relates to the attention light source and the broken line to the torch light source.

Illumination of the attention lamp is provided in the same manner as regards the display light sources during complete darkness and during e.g. dusk or dawn. However, in broad daylight or in illuminated rooms, illumination of the attention light source is still provided at a maximum level, as the information supplied by the attention lamp is still needed then.

The torch light source 24 is of course only needed when it is dark or almost dark, in order to illuminate e.g. the way in front of the user. However, it may instead be utilised by the user to be seen by others, e.g. when walking on a road at dusk or dawn. In that case, the timing program is preferably by-passed.

The graphs shown in figures 7b and 7c are preferably stored as one or more programs in a memory to be executed by the microprocessor 26. The light sensor 10 senses the ambient light, the control means 25 controls the light sources 20, 22, 24 etc. to provide the predetermined light intensity according to the relevant graph as a function of the sensed ambient light condition.

However, instead of providing a signal regarding the ambient light condition by the light sensor 10, the ambient light condition is determined by the user and the user provides a signal by manually turning the rotary switch 14. By turning it in one direction, a darker ambient light is indicated by the user, whereas, when turning it in the other direction lighter conditions are indicated. When turning the rotary switch, a control signal is provided to each light source 20, 22, 24 etc. in accordance with the graphs shown in figures 7b and 7c.

Disregarding whether the light sources are controlled in response to the ambient light sensor or in response to the rotary switch 14, which is turned in response to an action by a person in response to the ambient light, the timing function limits the period of time the current is provided to the light sources, disregarding the light intensity, if above zero. It is however possible to separately switch off the light source 24 manually when not needed.

It should be noted that the rotary switch may be used together with the light sensor 10, to adjust the light intensity, if the automatic control provided by the control means in response to the light sensor is considered too high or too low by the user.

It is contemplated that the invention may be modified within the scope of the accompanying claims. Thus, the torch light source may instead be a light or laser pointer. The attention light source 9 and the light sensor 11 may penetrate through the housing 3 instead of being associated with light guides 8, 10, however causing a more complicated way of tightening the housing against humidity. Furthermore, the rotary switch may be provided with a click-function to select control of a particular group of light sources having the same function. Furthermore, there may be one rotary switch for each group of light sensors having the same function. Furthermore, as a user option, the program stored in the memory may not be used at all regarding one or several of the groups of light sources. Consequently, each group of light sources may be switched completely off in order to save even more energy, or to be switched on to continuously obtain maximum light intensity. Accordingly, e.g. the torch light source may be switched on and off by a circuit breaker. Furthermore, the attention light source and the light sensor may be associated with a common light guide. Furthermore, the control of the light sources may instead be provided as discontinuous graphs, i.e. in steps. It should be noted that the attention light source 9, including the light guide 8, and the torch light source 24 and the torch lens 12 are optional regarding both the mobile telephone and the personal computer.

## Claims

1. A hand-held electronic device provided with at least one microprocessor, such as a mobile telephone, a personal computer or the like, comprising a control means (25), at least one first light source (9, 20, 22, 24) and at least one a second light source (9, 20, 22, 24) each of which being associated with said control means (25), adapted to control the light intensity of the first light source independently from the second light source, **characterised in that** said control means is adapted to variably adjust the light intensity, and **in that** said control means is adapted to control the light intensity depending on ambient light conditions (Figures 7b-7c).

2. A device according to claim 1, wherein said first light source (20) provides light for a display and wherein said second light source (22) provides light for a key pad.

3. A device according to claim 1 or 2, wherein at least one third light source (9) is adapted to give attention to the user, said control means (25) being adapted to control the light intensity of the third light source (9) depending on ambient light conditions.

4. A device according to anyone of claims 1 to 3, wherein a light sensor (11) for sensing ambient light is associated with said control means (25), wherein said control means is adapted to control said light intensity in response to the sensed ambient light.

5. A device according to claim 3 or 4, wherein said control means (25) is adapted to control the light intensity of the third light source (9) independently from the first light source (20) and the second light source (22), respectively.

6. A device according to claim 3 or 4, wherein said control means (25) is adapted to control the light intensity of the third light source (9) together with either of the first light source (20) and the second light source (22).

7. A device according to anyone of the preceding claims, wherein said control means (25) is adapted to control at least one of said light sources (9, 20, 22) to provide a strongest light intensity during dim ambient light conditions, and a less strong light intensity during darkness.

8. A device according to anyone of the preceding claims, wherein said control means (25) is adapted to provide a less strong light intensity during bright ambient light conditions.

9. A device according to anyone of the preceding claims, wherein said control means (25) is adapted to infinitely variably adjust the light intensity.

10. A device according to claim 9, wherein said control means (25) is adapted to control said light sources by means of predetermined light intensity profiles (Figures 7b-7c).

11. A device according to anyone of the preceding claims, wherein at least one fourth light source (24) is provided to illuminate an area beyond the hand-held unit.

12. A device according to anyone of the preceding claims, wherein at least one manually operable switch member (14, 15) is provided for manually adjusting the light intensity of said light sources.

13. A device according to claim 12, wherein said switch member comprises rotary switch (14) associated with an on/off switch (15).
